# EUROPÄISCHE PATENTSCHRIFT

(11) **EP 1 716 997 B1**
(45) Veröffentlichungstag und Bekanntmachung des Hinweises auf die Patenterteilung: **19.08.2009**
(21) Anmeldenummer: 06090060.2
(22) Anmeldetag: 25.04.2006
(51) Int. Cl.: B27M 3/12, B27M 1/06, B27B 5/18

(54) **Verfahren zur Steuerung einer Maschine mit einer Längskreissäge zur Herstellung von Treppenstufen**
Control method for a machine with longitudinal circular saw for manufactuing stair treads
Procédé de commande d'une machine avec scie circulaire longitudinale pour la fabrication de marches d'escalier

(30) Priorität: 28.04.2005 DE 102005020697
(43) Veröffentlichungstag der Anmeldung: 02.11.2006
(73) Patentinhaber: Raimann Holzoptimierung GmbH & Co. KG, 79108 Freiburg (DE)
(72) Erfinder: Hermann, Rainer, 79423 Heiterheim (DE)
(74) Vertreter: Gross, Felix

(56) Entgegenhaltungen:
- EP-A- 1 389 509
- DE-U1- 9 318 491
- US-A- 4 676 130

## Beschreibung

Die Erfindung betrifft die Herstellung von Treppenstufen mittels einer Längskreissäge.

Es ist bekannt, Treppenstufen auf Längskreissägen herzustellen. Dabei wird ein Softwareprogramm, das die Abmaße der gewünschten Form der Treppenstufen enthält, verwendet. Für die gewünschte Form der Treppenstufen wird mittels Drucker oder Plotter die Kontur auf Papier aufgebracht und ausgeschnitten. Die erhaltene Schablone wird auf die Ausgangsplatte aufgeklebt. Die so vorbereitete Platte wird dann auf den Maschinentisch ausgerichtet und mit einer Längskreissäge entsprechend der Kontur die Treppenstufe ausgesägt. Das Festhalten und Drehen der Platte entsprechend der Kontur erfolgt beispielsweise durch Vakuumsauger. Spezielle Formen und Hinterschnitte werden nachträglich mit einer Bandsäge in die Treppenstufen eingebracht.

Ebenso ist es bekannt, aus einer größeren Platte zwei Treppenstufen herzustellen. Dabei werden durch das Softwareprogramm die Konturen so gelegt, dass die Schablone für zwei Treppenstufen eine optimale Ausnutzung der Ausgangsplatte ermöglicht, also wenig Verschnitt entsteht. Als erstes erfolgt der Trennschnitt zwischen den beiden Treppenstufen und danach werden die erhaltenen Plattenteile einzeln weiter bis zur endgültigen Treppenstufe geschnitten.

Die bisher verwandten Schablonen für die Herstellung von Treppenstufen waren nach dem Aufkleben auf die Ausgangsplatten in den seltensten Fällen noch einmal verwendbar. Sie mussten jeweils neu angefertigt werden. Es entstand eine hohe Kostenbelastung.

Aufgabe der Erfindung ist es daher, eine Möglichkeit zu schaffen, eine Positionierung der Ausgangsplatte ohne eine zusätzliche Schablone für das Herstellen von Treppenstufen auf Langkreissägemaschinen zu schaffen.

Die Aufgabe wird erfindungsgemäß durch die kennzeichnenden Merkmale der Lehre des Anspruchs 1 gelöst.

Erfindungsgemäß wird die gewünschte Treppenkontur direkt aus dem Softwareprogramm über einen Laser, vorzugsweise einen 2D-Laser auf den Maschinentisch bzw. die zu schneidende Platte projiziert. Dazu ist über dem Maschinentisch ein Laser mit mehreren beweglichen Spiegeln angeordnet. Beim Zuschneiden der Treppenstufen wird die Ausgangsplatte für jeden Schnitt durch eine durch den Laser vorgegebene Kontur auf der Schnittfuge des Längssägeblattes ausgerichtet. Für die Durchführung des Sägevorgangs wird die Ausgangsplatte beispielsweise auf dem Maschinentisch aufgelegt, auf eine durch den Laser angezeigte Kontur so ausgerichtet, dass die Schnittfuge mit der Laserlinie deckungsgleich ist und in dieser Position durch einen Niederhalter oder einen Druckbalken festgehalten. Nach dem durchgeführten Schnitt wird die Platte automatisch um einen entsprechenden Winkel gedreht, bis wiederum die Schnittfuge mit der Laserlinie deckungsgleich ist. Dieser Vorgang wird solange fortgeführt, bis alle Kanten geschnitten sind.

Das Drehen der Ausgangsplatte erfolgt programmiert durch vorher eingegebene Daten in einen PC durch Tastendruck oder über Fernbedienung.

Notwendige Hinterschnitte werden anschließend auf einer Bandsäge ausgeführt. Selbstverständlich ist es auch möglich, über das Softwareprogramm den Laser so zu steuern, dass aus einer großen Platte zwei Treppenstufen geschnitten werden. Vorzugsweise wird hier nur ein Trennschnitt zwischen den beiden Treppenstufen vorgenommen. Die einzelnen vorgeschnittenen Platten werden dann einzeln auf der gleichen Anlage weiterbearbeitet. Ebenso können die erhaltenen Plattenteile auf CNC-Maschinen weiterbearbeitet werden. Dazu sind ebenfalls über dem Maschinentisch Laser für die Projektierung der gewünschten Konturen der Treppenstufen angebracht. Die letzte Variante ist besonders für die Fälle geeignet, wo aus einer größeren Platte zwei Treppenstufen mit unterschiedlicher Kontur herausgeschnitten werden sollen.

Bei einer anderen Variante des erfindungsgemäßen Verfahrens werden die Konturen mittels des Lasers auf die Ausgangsplatten aufgebrannt. Dazu ist nur ein üblicher Arbeitstisch mit darüber angeordnetem Laser notwendig. Von diesem Arbeitstisch wird dann die so vorbereitete Platte über ein automatisches Plattenzuführsystem einer Anlage mit Längskreissäge zum Aussägen der Treppenstufen zugeführt.

Im vorliegenden Fall wird in einem separaten Arbeitsschritt eine der eingebrannten Konturen zur Schnittfuge des Sägeblattes ausgerichtet und mit einer Längskreissäge geschnitten. Danach wird in üblicher Weise mit den vorher beschriebenen Maßnahmen die Platte um einen bestimmten Winkel gedreht, die vorgebrannte Kontur wieder auf die Schnittfuge ausgerichtet und der zweite Schnitt vorgenommen. In gleicher Weise erfolgen dann die weiteren notwendigen Schnitte.

Die Erfindung soll nachfolgend anhand von Beispielen unter Bezugnahme auf die Zeichnungen näher erläutert werden. Es zeigen:
- Fig. 1: die Seitenansicht einer Längskreissägenmaschine;
- Fig. 2: die Draufsicht auf eine Längskreissägenmaschine;
- Fig. 3a, 3b, 3c: eine Abfolge der Schnittlinien bis zur Herstellung der Treppenstufe;

- Fig. 4a: eine Schnittlinienwahl bei großen Platten;
- Fig. 4b: die erhaltenen Teile aus einer großen Platte zur Weiterbearbeitung;
- Fig. 5: Formen von Treppenstufen bzw. aus einer größeren Platte erhaltene Treppenstufen.

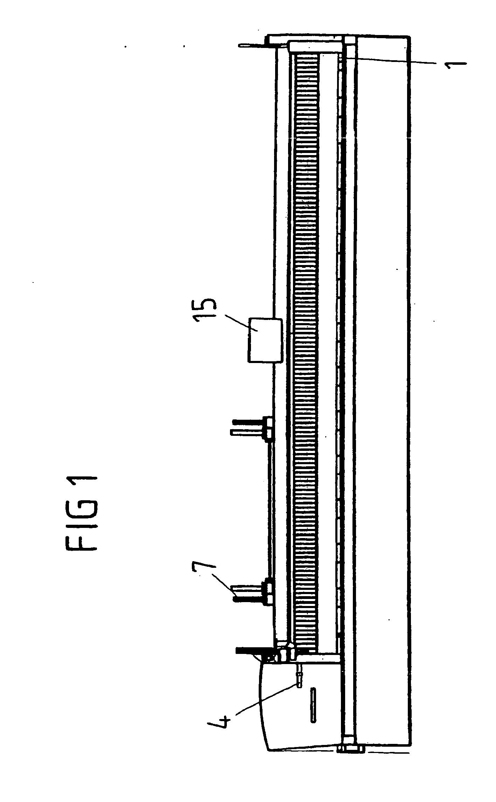

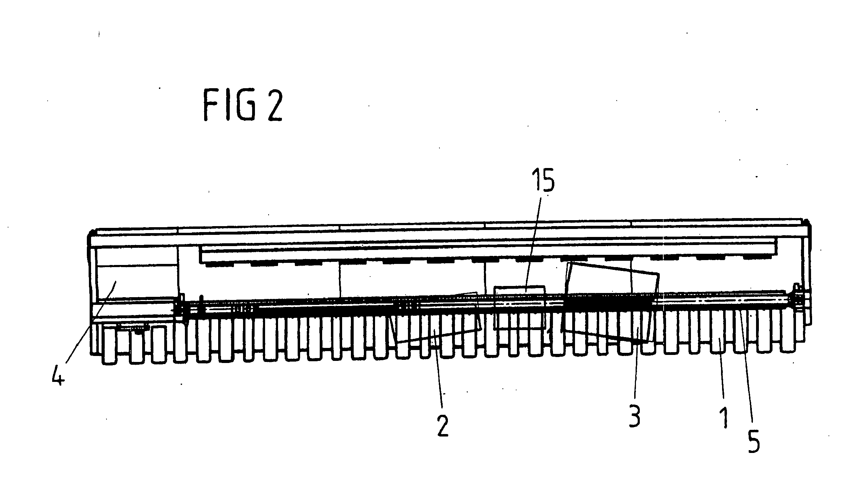

In Figur 1 und 2 wird eine Maschine mit Längskreissäge gezeigt. Über dem Maschinentisch 1 ist der Laser 15 in einer Halterung mittig angeordnet. Der Laser 15 arbeitet zur genauen Positionierung der Konturen auf der zu verarbeitenden Platte 2, 3 mit nicht gezeigten Spiegeln zusammen. Seine Steuersignale erhält der Laser 15 aus einem PC 4, der mit sämtlichen notwendigen Messwerten gespeichert wurde. Dabei ist der Laserkopf direkt über der Schnittfuge 5 des Sägeblattes angeordnet. Da die Position der Schnittfuge im Maschinentisch vorgegeben ist, muss der Laserkopf parallel zur Schnittfuge die Konturen für die Schnittlinien 7, 8, 9 vorgeben. Daraus folgt, dass die Platte 2, 3 dementsprechend in die jeweilig notwendige Position gedreht wird. Vorzugsweise wird für die Abbildung der Konturen ein 2D-Laser eingesetzt.

Die zu verarbeitende Platte 2, 3 wird durch Roboter oder durch den Bedienenden in die durch den Laser 15 vorgegebene Position gebracht. Das Festhalten während des Schnittes erfolgt durch Niederhalter 7.

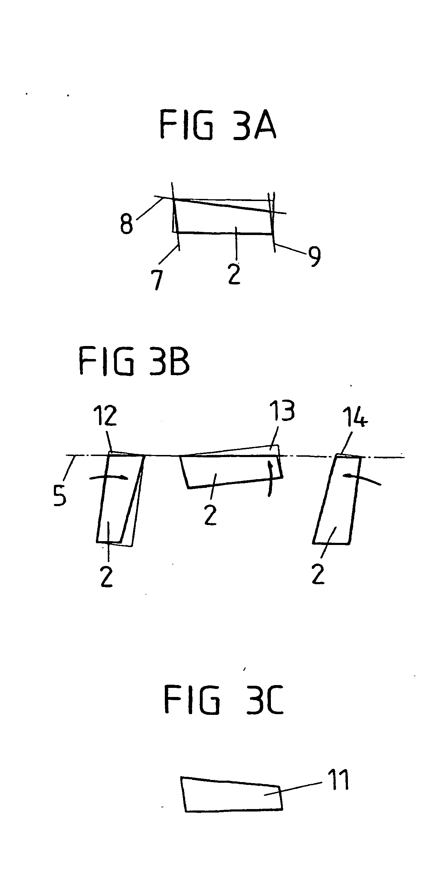

Wie in den Figuren 3a, 3b und 3c gezeigt, wird die Ausgangplatte 2 so gedreht, dass die Schnittlinie 7 und Schnittfuge 5 deckungsgleich zu der durch die Lasersignale gegebene Kontur liegen und damit auch zur Schnittfuge 5 für das Sägeblatt. Nach Ausführung des ersten Schnittes wird die Ausgangsplatte so weit gedreht, dass die Schnittlinie 8 deckungsgleich zur Schnittfuge 5 liegt. Jetzt erfolgt der zweite Schnitt. Danach wird die Platte 2 wiederum gedreht, bis die Schnittlinie 9 deckungsgleich zur Schnittfuge 10 liegt. Es erfolgt der dritte Schnitt. Man erhält die Treppenstufe 11 mit den gewünschten Konturen. Mit 12, 13, 14 sind die anfallenden Abfälle gekennzeichnet.

Das Drehen der Platte 2 zwischen den einzelnen Schnittlinien erfolgt programmiert. Dazu wird eine separate Programmierung für die Lageveränderung der Platte 2 eingesetzt, deren Auslösung über Fernbedienung oder Tastendruck durch den Bedienenden erfolgen kann.

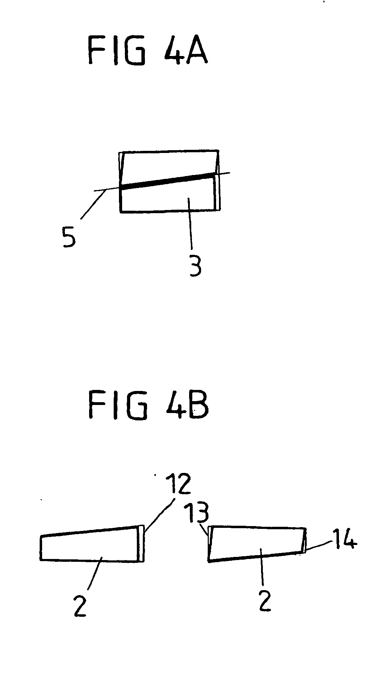

In den Figuren 4a und 4b ist die Aufteilung einer größeren Ausgangsplatte 3 durch einen Schnitt in zwei Teile für die Weiterverarbeitung zu zwei Treppenstufen 11 mit unterschiedlichen Konturen festgehalten. Die Ausrichtung und das Festhalten erfolgt dabei in der vorher beschriebenen Weise. Man erhält zwei vorbehandelte Plattenteile, bei denen die endgültigen Konturen mindestens für eine der Treppenstufen 11 auf zwei Seiten feststeht. Die endgültige Herstellung der Treppenstufen 11 kann unmittelbar anschließend auf der gleichen Maschine erfolgen. Es wäre nur eine Umstellung des Arbeitsprogramms für den Laser 15 notwendig.

Bei einer nicht näher gezeigten Anlage wird die Ausgangsplatte 2, 3 auf einen Werktisch ohne Längskreissäge aufgebracht, über dem eine erfindungsgemäße Laseranordnung 15 vorgesehen ist. Mit dem Laser 15 wird die gewünschte Kontur in die Ausgangsplatte 2, 3 eingebrannt. In einer an sich bekannten Maschine mit Längskreissägeblatt kann dann das Heraussägen der gewünschten Treppenstufe entsprechend der eingebrannten Kontur erfolgen. Beide Vorgänge könnten völlig unabhängig voneinander durchgeführt werden.

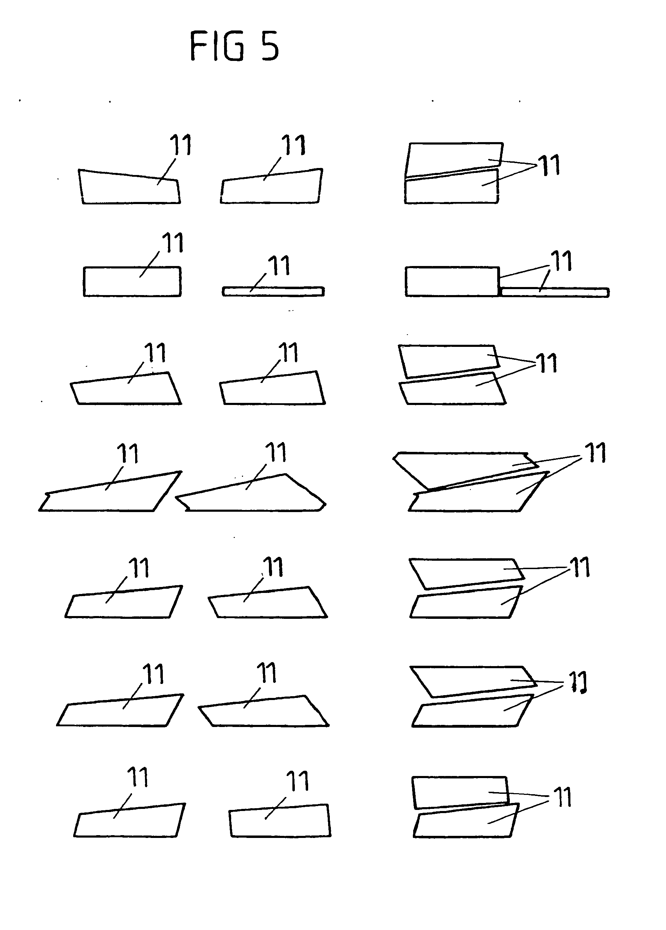

In den Figuren 5 sind mehrere mögliche Konturen von Treppenstufen festgehalten.

## Patentansprüche

1. Verfahren zur Steuerung einer Maschine mit einer Längskreissäge zur Herstellung von Treppenstufen mit den unterschiedlichsten äußeren Konturen,
**dadurch gekennzeichnet,**
**dass** die gewünschten Konturen für die Treppenstufen (11) durch einen über dem Maschinentisch (1) parallel zur Schnittfuge (5) des Sägeblattes angeordneten Laser (15), der mit Spiegeln zusammenwirkt und seine Daten aus einem gespeicherten Softwareprogramm erhält, auf die Ausgangsplatten (2, 3) projiziert werden.

2. Verfahren nach Anspruch 1, **dadurch gekennzeichnet, dass** der Laser (15) ein 2D-Laser ist.

3. Verfahren nach Anspruch 1 und 2, **dadurch gekennzeichnet, dass** nach Ausführung eines ersten Schnittes entlang der Schnittlinie (7) in der Schnittfuge (5) die Platte (2) über einen Winkel so verdreht wird, dass die Kontur für die Schnittlinie (8) deckungsgleich zur Schnittfuge (5) verläuft und nach Ausführung des zweiten Schnittes die Platte (2) weiter über einen Winkel verdreht wird, bis die Kontur für die Schnittlinie (9) deckungsgleich zur Schnittfuge (5) verläuft.

4. Verfahren nach mindestens einem der Ansprüche 1 bis 3; **dadurch gekennzeichnet, dass** die Verdrehung der Platten (2, 3) über einen Winkel durch einen Roboter oder durch den Bedienenden erfolgt.

5. Verfahren nach mindestens einem der Ansprüche 1 bis 4, **dadurch gekennzeichnet, dass** das Festhalten der Platten (2, 3) während des Schnittes durch Niederhalter (7) erfolgt.

6. Verfahren nach mindestens einem der Ansprüche 1 bis 5, **dadurch gekennzeichnet, dass** die Verdrehung der Platte (2, 3) über einen bestimmten Winkel durch ein separates Programm, das durch Knopfdruck oder Fernsteuerung ausgelöst wird, erfolgt.

7. Verfahren nach mindestens einem der Ansprüche 1 bis 6, **dadurch gekennzeichnet, dass** aus einer größeren Platte (3) durch einen Mittelschnitt zwei vorbearbeitete Platten (2) erhalten werden.

8. Verfahren zum Herstellen von Treppenstufen, mit den Schritten:
- Auflegen einer zu verarbeitenden Ausgangsplatte (2, 3) auf einen Arbeitstisch;
- Projizieren einer herzustellenden Kontur auf die Ausgangsplatte (2, 3) mittels eines über der Ausgangsplatte angeordneten Lasers derart, dass die Kontur in die Ausgangsplatte (2, 3) eingebrannt wird, wobei der Laser (15) mit Spiegeln zusammenwirkt und seine Daten aus einem gespeicherten Softwareprogramm erhält
- Sägen der Ausgangsplatte (2, 3) entlang der eingebrannten Kontur mittels einer Längskreissäge.

9. Maschine mit einer Längskreissäge zur Herstellung von Treppenstufen mit den unterschiedlichsten äußeren Konturen, mit
- einem Maschinentisch (1) zum Auflegen einer zu verarbeitenden Ausgangsplatte (2, 3);
- mindestens einem Sägeblatt; und
- einem über dem Maschinentisch (1) parallel zu einer Schnittfuge (5) des Sägeblattes angeordneten Laser (15),
**dadurch gekennzeichnet, dass**
der Laser (15) zum Projizieren der gewünschten Konturen für die Treppenstufen (11) auf die Ausgangsplatte (2, 3) ausgebildet ist, wobei der Laser (15) ein 2D-Laser ist, der mit Spiegeln zusammenwirkt und seine Daten aus einem gespeicherten Softwareprogramm erhält.

## Claims

1. Method of controlling a machine with longitudinal circular saw for manufacturing stair treads with different exterior contoures,
**characterized in that**
the desired contours of the stair treads (11) are projected onto the initial boards (2, 3) by a laser (15) arranged above the machine table and parallel to the cutting groove (5) of the saw blade, the laser cooperating with mirrors and receiving its data from a stored software program.

2. Method according to claim 1, **characterized in that** the laser (15) is a 2D laser.

3. Method according to claim 1 and 2, **characterized in that** after having completed a first cut along the cutting line (7) in the cutting groove (5) the board (2) is rotated through an angle such that the contour of the cutting line (8) extends congruent with the cutting groove (5), and after having completed a second cut the board (2) is rotated through an angle until the contour of the cutting line (9) is congruent with the cutting groove (5).

4. Method according to one of the claims 1 to 3,
**characterized in that** the rotation of the board (2, 3) through an angle is performed by a robot or an operator.

5. Method according to one of the claims 1 to 4,
**characterized in that** the mounting of the boards (2, 3) during cutting is accomplished by downholders (7).

6. Method according to one of the claims 1 to 5,
**characterized in that** the rotation of the board (2, 3) through a predetermined angle is accomplished by a separate program which is triggered at the push of a button or by a remote control.

7. Method according to one of the claims 1 to 6,
**characterized in that** two prefabricated boards are obtained from a larger board by middle cutting.

8. Method of fabricating stair treads comprising the steps of:
- depositing an initial board (2, 3) to be processed on a working table;
- projecting a contour to be produced on the initial board (2, 3) by means of a laser arranged above the initial board (2, 3) such that the contour is burned in into the initial board (2, 3), wherein the laser (15) cooperates with mirrors and receives its data from a stored software program;
- sawing the initial board (2, 3) along the burned in contour by means of a longitudinal circular saw.

9. Machine with a longitudinal circular saw for fabrication of stair treads with most different exterior contours, comprising
- a machine table (1) for depositing an initial board (2, 3) to be processed;
- at least one saw blade; and
- a laser (15) arranged above the machine table (1) and parallel to a cutting groove (5) of the saw blade,
**characterized in that**
the laser (15) is configured for projecting the desired contours of the stair treads (11) on the initial board (2, 3), wherein the laser is a 2D laser cooperating with mirrors and receiving its data from a stored software program.

## Revendications

1. Procédé de commande d'une machine avec une scie circulaire longitudinale pour la fabrication de marches d'escalier aux contours extérieurs différents,
**caractérisé en ce**
**que** les contours souhaités pour les marches d'escalier (11) sont projetés sur les plaques de sortie (2, 3) par un laser (15) disposé au-dessus de la table de machine (1) parallèlement au trait de coupe (5) de la lame de scie, qui coopère avec des miroirs et obtient ses données à partir d'un logiciel enregistré.

2. Procédé selon la revendication 1, **caractérisé en ce que** le laser (15) est un laser à deux dimensions.

3. Procédé selon la revendication 1 et 2, **caractérisé en ce qu'**après la réalisation d'une première coupe le long de la ligne de coupe (7) dans le trait de coupe (5), la plaque (2) est pivotée au-delà d'un angle, de sorte que le contour pour la ligne de coupe (8) s'étende en coïncidence avec le trait de coupe (5) et après la réalisation de la seconde coupe, la plaque (2) soit encore pivotée au-delà d'un angle jusqu'à ce que le contour pour la ligne de coupe (9) s'étende en coïncidence avec le trait de coupe (5).

4. Procédé selon au moins l'une quelconque des revendications 1 à 3, **caractérisé en ce que** la rotation des plaques (2, 3) au-delà d'un angle est effectuée par un robot ou par l'opérateur.

5. Procédé selon au moins l'une quelconque des revendications 1 à 4, **caractérisé en ce que** le maintien des plaques (2, 3) pendant la coupe est effectué par des serreflancs (7).

6. Procédé selon au moins l'une quelconque des revendications 1 à 5, **caractérisé en ce que** la rotation de la plaque (2, 3) au-delà d'un angle déterminé est effectuée par un programme séparé qui est déclenché par une pression sur un bouton ou par télécommande.

7. Procédé selon au moins l'une quelconque des revendications 1 à 6, **caractérisé en ce que** deux plaques (2) préusinées sont obtenues à partir d'une plaque (3) plus grande par une coupe médiane.

8. Procédé de fabrication de marches d'escalier, présentant les étapes suivantes :
- pose d'une plaque de sortie (2, 3) à usiner sur une table de travail ;
- projection d'un contour à fabriquer sur la plaque de sortie (2, 3) au moyen d'un laser disposé au-dessus de la plaque de sortie de telle sorte que le contour soit découpé dans la plaque de sortie (2, 3), le laser (15) coopérant avec des miroirs et obtenant ses données à partir d'un programme logiciel enregistré ;
- sciage de la plaque de sortie (2, 3) le long du contour découpé au moyen d'une scie circulaire longitudinale.

9. Machine avec une scie circulaire longitudinale pour la fabrication de marches d'escalier aux contours extérieurs différents, avec
- une table de machine (1) pour la pose d'une plaque de sortie (2, 3) à usiner ;
- au moins une lame de scie ; et
- un laser (15) disposé au-dessus de la table de machine (1) parallèlement à un trait de coupe (5) de la lame de scie,
**caractérisée en ce que**
le laser (15) est réalisé pour la projection des contours souhaités pour les marches d'escalier (11) sur la plaque de sortie (2, 3), le laser (15) étant un laser à deux dimensions, qui coopère avec des miroirs et obtient ses données à partir d'un logiciel enregistré.
